# EUROPEAN PATENT APPLICATION

(11) **EP 2 792 706 A1**
(43) Date of publication of application: **22.10.2014**
(21) Application number: 12857989.3
(22) Date of filing: 11.12.2012
(51) Int. Cl.: C08J 9/28, C09J 7/00

(54) **NON-SLIP MATERIAL, AND TEMPORARY FIXING MATERIAL**

(30) Priority: 13.12.2011 JP 2011271988; 13.12.2011 JP 2011271989; 07.12.2012 JP 2012268099; 07.12.2012 JP 2012268100
(71) Applicant: Nitto Denko Corporation, Ibaraki-shi, Osaka 567-8680 (JP); Kabushiki Kaisha Nitoms, Tokyo 104-0061 (JP)
(72) Inventor: HIRAO, Akira, Ibaraki-shi Osaka 567-8680 (JP); HYODO, Tomonori, Ibaraki-shi Osaka 567-8680 (JP); OKEYUI, Takuji, Ibaraki-shi Osaka 567-8680 (JP); SATODA, Yoshinari, Tokyo 104-0061 (JP); AKAMATSU, Motoaki, Tokyo 104-0061 (JP); KUSAKABE, Naoki, Tokyo 104-0061 (JP)
(74) Representative: Grünecker, Kinkeldey, Stockmair & Schwanhäusser
(86) International application number: PCT/JP2012/082057
(87) International publication number: WO 2013/089094

(57) **Abstract**

The present invention provides a non-slip material and a temporary fixing material each of that does not rupture even after repeated use, and can maintain high levels of pressure-sensitive adhesiveness and peelability. The non-slip material or the temporary fixing material of the present invention includes a foam having an open-cell structure having through-holes between adjacent spherical cells, wherein: the spherical cells have an average pore diameter of less than 20 µm; the through-holes have an average pore diameter of 5 µm or less; the non-slip material has, on a surface thereof, surface openings having an average pore diameter of 20 µm or less; and the non-slip material has a normal shear adhesive strength of 1 N/cm² or more.

## Description

### Technical Field

The present invention relates to a non-slip material and a temporary fixing material.

### Background Art

Hitherto, a sheet including a pressure-sensitive adhesive layer has been used as a non-slip sheet for furniture, a rug, or the like.

In addition, in recent years, a non-slip sheet obtained by providing each of both surfaces of a base material with an acrylic foam layer has been proposed (Patent Literature 1). The non-slip sheet has an advantage in that the problem of an adhesive residue does not occur because the sheet does not have any pressure-sensitive adhesive layer. However, when the thickness of the acrylic foam layer constituting the non-slip sheet is 0.3 mm or less, the sheet may have an insufficient mechanical strength and may rupture at the time of its detachment. Accordingly, additional development of a non-slip material that does not rupture even after repeated use, and can maintain high levels of pressure-sensitive adhesiveness and peelability has been required. In addition, the acrylic foam layer constituting the non-slip sheet contains a foaming aid and a foam stabilizer in itself, and concern has been raised about the contamination of an adherend due to the bleeding of these materials with time.

### Citation List

### Patent Literature

[PTL 1] JP 2010-234536 A

### Summary of Invention

### Technical Problem

The present invention has been made to solve the problems, and an object of the present invention is to provide a non-slip material that does not rupture even after repeated use, and can maintain high levels of pressure-sensitive adhesiveness and peelability.

### Solution to Problem

According to one embodiment of the present invention, there is provided a non-slip material. The non-slip material includes a foam having an open-cell structure having through-holes between adjacent spherical cells, in which: the spherical cells have an average pore diameter of less than 20 µm; the through-holes have an average pore diameter of 5 µm or less; the non-slip material has, on a surface thereof, surface openings having an average pore diameter of 20 µm or less; and the non-slip material has a normal shear adhesive strength of 1 N/cm² or more.

In a preferred embodiment, the non-slip material has a 180° peel test strength of 1 N/25 mm or less.

In a preferred embodiment, the non-slip material has a 60°C holding strength of 0.5 mm or less.

In a preferred embodiment, the non-slip material has a 50% compressive load of 150 N/cm² or less.

In a preferred embodiment, the non-slip material has a rate of dimensional change when stored at 125°C for 22 hours of less than ±5%.

In a preferred embodiment, when the non-slip material is stored in a 50% compressed state at 80°C for 22 hours and then cooled to 23°C, and then 30 minutes lapse after release of the compressed state, the non-slip material has a 50% compression set recovery rate of 70% or more.

In a preferred embodiment, the foam has a density of from 0.15 g/cm³ to 0.6 g/cm³.

In a preferred embodiment, the foam has a cell content of 30% or more.

In a preferred embodiment, the non-slip material includes a temporary fixing material.

### Advantageous Effects of Invention

According to one embodiment of the present invention, it is possible to provide the non-slip material that does not rupture even after repeated use, and can maintain high levels of pressure-sensitive adhesiveness and peelability. The non-slip material according to the one embodiment of the present invention can be put into practical use even when, for example, its total thickness is 0.5 mm or less.

### Brief Description of Drawings

FIG. **1A** is a schematic cross-sectional view of a non-slip material according to a preferred embodiment of the present invention.
FIG. **1B** is a schematic cross-sectional view of a non-slip material according to another preferred embodiment of the present invention.
FIG. 2A is a schematic cross-sectional view of a non-slip material according to still another preferred embodiment of the present invention.
FIG. 2B is a schematic cross-sectional view of a non-slip material according to still another preferred embodiment of the present invention.
FIG. 3 is a photographic view of an SEM photograph of a cross-section of a foam, the photographic view clearly showing an open-cell structure having through-holes between adjacent spherical cells.
FIG. 4 is a photographic view of a surface/cross-sectional SEM photograph obtained by photographing a non-slip sheet produced in Example 1 from an oblique direction.
FIGS. 5 are explanatory views illustrating a method of measuring a 50% compression set recovery rate.

### Description of Embodiments

### «A. Non-slip material»

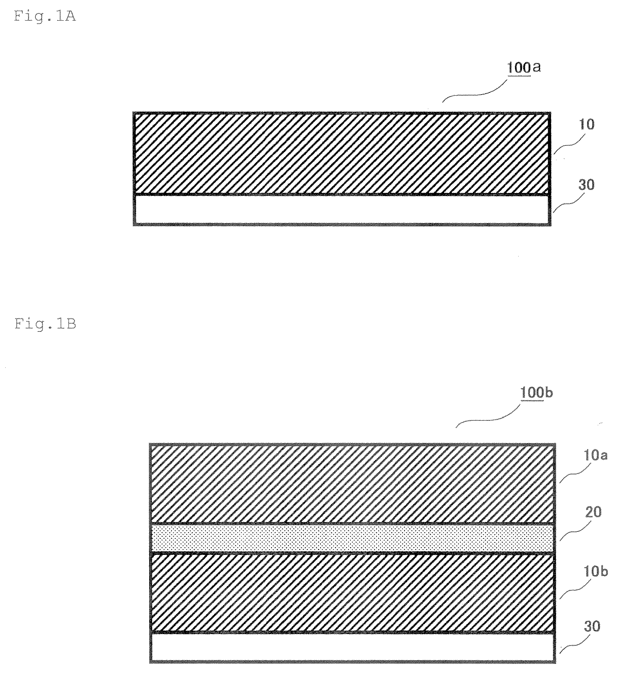

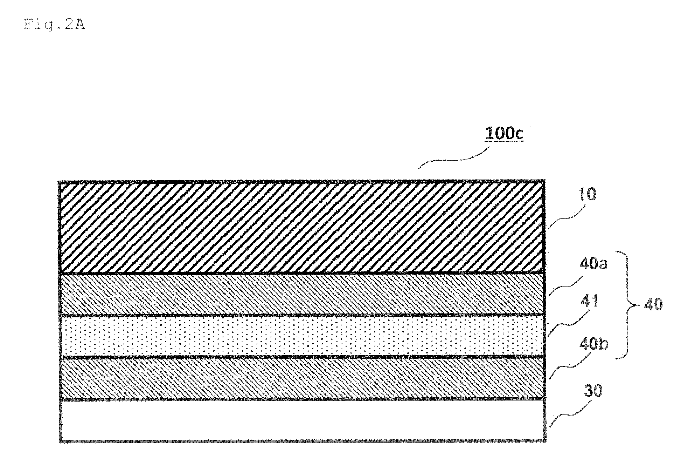

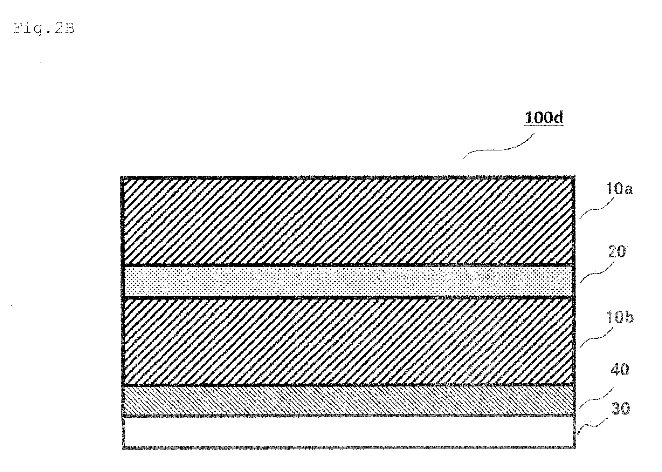

A non-slip material of the present invention includes a foam having a predetermined structure and may further include a pressure-sensitive adhesive layer as required. FIG. **1A** is a schematic cross-sectional view of a non-slip material according to a preferred embodiment of the present invention. A non-slip material **100a** includes a foam **10** having a predetermined structure. FIG. **1B** is a schematic cross-sectional view of a non-slip material according to another preferred embodiment of the present invention. A non-slip material **100b** includes a first foam **10a** having a predetermined structure, a base material **20,** and a second foam **10b** having a predetermined structure in the stated order. FIG. **2A** is a schematic cross-sectional view of a non-slip material according to still another preferred embodiment of the present invention. A non-slip material **100c** includes the foam **10** having a predetermined structure and a pressure-sensitive adhesive layer **40** placed on one surface of the foam. The pressure-sensitive adhesive layer **40** is constituted of a first pressure-sensitive adhesive layer **40a,** a second pressure-sensitive adhesive layer **40b,** and a support **41** placed between the layers. FIG. **2B** is a schematic cross-sectional view of a non-slip material according to still another preferred embodiment of the present invention. A non-slip material 100d includes the first foam **10a** having a predetermined structure, the base material **20,** the second foam **10b** having a predetermined structure, and the pressure-sensitive adhesive layer **40** in the stated order. Although a peeling film **30** is provided for the protection of the pressure-sensitive adhesive surface of the non-slip material (the surface of the foam or the surface of the pressure-sensitive adhesive layer) in each of FIG. **1A,** FIG. **1B****,** FIG. **2A****,** and FIG. **2B****,** the peeling film may not be provided. According to the non-slip material **100a** or **100b,** the foam itself has an adhesion and hence an article placed on the material can be prevented from slipping without the use of any pressure-sensitive adhesive layer (that is, without the occurrence of the problem of an adhesive residue). In addition, an article can be prevented from slipping by placing the article on one surface of the non-slip material **100a** or **100b** in a state where the other surface thereof is fixed to a desired place through any appropriate pressure-sensitive adhesive layer. Meanwhile, according to the non-slip material **100c** or **100d,** the non-slip material can be strongly fixed to a desired place by a pressure-sensitive adhesive layer surface as one surface thereof, and an article can be prevented from slipping by a foam surface as the other surface thereof without the problem of an adhesive residue. In addition, as described above, the non-slip material of the present invention may be a temporary fixing material for temporarily fixing a desired article to the surface of any appropriate adherend in one embodiment because its foam surface and pressure-sensitive adhesive layer surface can each exhibit adhesive characteristics.

The non-slip material of the present invention has surface openings on its surface. The average pore diameter of each of the surface openings is 20 µm or less, preferably less than 20 µm, more preferably 15 µm or less, still more preferably 10 µm or less, still more preferably 5 µm or less, particularly preferably 4 µm or less, most preferably 3 µm or less. The lower limit of the average pore diameter of each of the surface openings is not particularly limited and is, for example, preferably 0.001 µm, more preferably 0.01 µm. When the non-slip material of the present invention has surface openings and the average pore diameter of each of the surface openings falls within the range, the surface openings serve as micro suckers, and hence, a non-slip material. capable of expressing a sufficient adhesion can be provided, and a non-slip material having high flexibility and high heat resistance can be provided.

The non-slip material of the present invention has a normal shear adhesive strength of 1 N/cm² or more, preferably 3 N/cm² or more, more preferably 5 N/cm² or more, still more preferably 7 N/cm² or more, particularly preferably 9N/cm² or more, mostpreferably 10 N/cm² or more. When the normal shear adhesive strength of the non-slip material of the present invention falls within the range, the non-slip material of the present invention can express a sufficient adhesion.

The non-slip material of the present invention has a 180° peel test strength (for example, a 180° peel test strength of the foam surface) of preferably 1 N/25 mm or less, more preferably 0.8 N/25 mm or less, still more preferably 0.5 N/25 mm or less, particularly preferably 0.3 N/25 mm or less. When the 180° peel test strength of the non-slip material of the present invention falls within the range, the non-slip material of the present invention can express an excellent effect of being able to be easily peeled off in spite of having a high adhesion as described above.

The non-slip material of the present invention has a 60 °C holding strength (for example, a 60 °C holding strength of the foam surface) of preferably 0.5 mm or less, more preferably 0.4 mm or less, still more preferably 0.3 mm or less, particularly preferably 0.2 mm or less. When the 60°C holding strength of the non-slip material of the present invention falls within the range, the non-slip material of the present invention can achieve both of excellent heat resistance and a sufficient adhesion.

The non-slip material of the present invention has a 50% compressive load of preferably 150 N/cm² or less, more preferably 120 N/cm² or less, still more preferably 100 N/cm² or less, particularly preferably 70 N/cm² or less, most preferably 50 N/cm² or less. When the 50% compressive load of the non-slip material of the present invention falls within the range, the non-slipmaterial of the present invention can express excellent flexibility.

The non-slip material of the present invention has a rate of dimensional change of preferably less than ±5%, more preferably ±3% or less, still more preferably ±1% or less, when stored at 125°C for 22 hours. When the rate of dimensional change in the non-slip material of the present invention stored at 125°C for 22 hours falls within the range, the non-slip material of the present invention can have excellent heat resistance.

When the non-slip material of the present invention is stored in a 50% compressed state at 80°C for 22 hours and then cooled to 23 °C, and then 30 minutes lapse after the release of the compressed state, the non-slip material has a 50% compression set recovery rate of preferably 70% or more, more preferably 75% or more, still more preferably 80% or more, particularly preferably 85% or more. The upper limit of the 50% compression set recovery rate is preferably 100%. When the 50% compression set recovery rate of the non-slip material of the present invention falls within the range, the non-slip material of the present invention can express excellent compression set recoverability. A specific method of measuring the 50% compression set recovery rate is as described in Examples to be described later.

The non-slip material of the present invention may adopt any appropriate shape. In practice, the non-slip material of the present invention is preferably a sheet-shaped non-slip sheet. When the non-slip material of the present invention is a non-slip sheet, its thickness, and the lengths of its long side and short side may each adopt any appropriate value. The thickness of the non-slip material may be, for example, 0.05 mm to 5.0 mm.

### <<A-1. Foam>>

The foam in the non-slip material of the present invention has an open-cell structure having through-holes between adjacent spherical cells. The "spherical cells" as used herein do not need to be true spherical cells in a strict sense, and for example, may be substantially spherical cells each partially having a strain or cells each formed of a space having a large strain.

The spherical cells included in the foam each have an average pore diameter of less than 20 µm, preferably 15 µm or less, still more preferably 10 µm or less. The lower limit value of the average pore diameter of each of the spherical cells included in the foam is not particularly limited, and for example, is preferably 0.01 µm, more preferably 0.1 µm, still more preferably 1 µm. When the average pore diameter of each of the spherical cells included in the foam falls within the range, the average pore diameter of each of the spherical cells of the foam can be precisely controlled to a small one, and a non-slip material excellent in flexibility and heat resistance and capable of being put into practical use even when having a total thickness of 0.5 mm or less can be provided.

The foam has a density of preferably 0.15 g/cm³ to 0. 6 g/cm³, more preferably 0.15 g/cm³ to 0.5 g/cm³, still more preferably 0.15 g/cm³ to 0.45 g/cm³, particularly preferably 0.15 g/cm³ to 0.4 g/cm³. When the density of the foam falls within the range, while the range of the density of the foam is controlled to a wide one, a non-slip material excellent in flexibility and heat resistance can be provided.

The open-cell structure of the foam may be an open-cell structure having through-holes between most or all of adjacent spherical cells, or may be a semi-closed and semi-open-cell structure in which the number of the through-holes is relatively small. The use of the foam having such open-cell structure enables the non-slip material of the present invention to have a sufficient adhesion. This is probably because of the following reason. When an article is mounted on the non-slip material, the spherical cells and through-holes in the foam are compressed by the self-weight of the article and by further pressing as required (when the non-slip material is a temporary fixing material, by pressing an article to be temporarily fixed against an adherend through the temporary fixing material) to degas air from the surface of the foam to the outside, and hence adsorptivity is exhibited owing to an atmospheric pressure difference between the inside and the outside caused by the degassing. Specifically, the air is easily degassed to the outside by the pressing because the open-cell structure elongates in any direction in the foam. Probably as a result of the foregoing, even air that has entered a gap between the article and/or the adherend, and the non-slip material upon attachment can be easily removed by utilizing the open-cell structure, and excellent adsorptivity is exhibited because of the occurrence of a sufficient atmospheric pressure difference. In addition, as described above, the adhesion of the non-slip material of the present invention utilizes an adsorption strength, and hence the material shows substantially no reduction of its pressure-sensitive adhesiveness even when its peeling and attachment are repeated, and the material is excellent in peelability. Further, even when the pressure-sensitive adhesiveness reduces owing to the adhesion of dust or the like, the pressure-sensitive adhesiveness can be recovered by water washing or wiping with a wet tissue or the like.

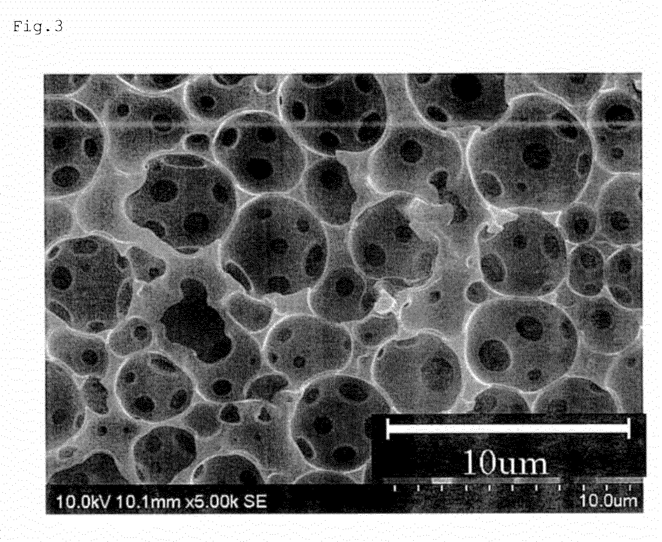

The through-holes present between the adjacent spherical cells affect the physical properties of the non-slip material. For example, there is a tendency that, as the average pore diameter of each of the through-holes becomes smaller, the strength of the non-slip material becomes higher. FIG. 3 shows a photographic view of a cross-sectional SEM photograph of the foam, the photographic view clearly showing an open-cell structure having through-holes between adjacent spherical cells.

The through-holes present between the adjacent spherical cells each have an average pore diameter of 5 µm or less, preferably 4 µm or less, more preferably 3 µm or less. The lower limit value of the average pore diameter of each of the through-holes present between the adjacent spherical cells is not particularly limited, and for example, is preferably 0.001 µm, more preferably 0.01 µm. When the average pore diameter of each of the through-holes present between the adjacent spherical cells falls within the range, a non-slip material excellent in flexibility and heat resistance can be provided.

The cell content of the foam is preferably 30% or more, more preferably 40% or more, still more preferably 50% or more. When the cell content of the foam falls within the range, the non-slip material of the present invention can express a sufficient adhesion, and can express high flexibility and high heat resistance.

In a preferred embodiment, the foam is crack-free in a 180° bending test. When the foam having such very excellent toughness is used, a non-slip material capable of being rolled up like paper can be obtained.

The foam has a tensile strength of preferably 0.1 MPa or more, more preferably 0.15 MPa or more, still more preferably 0.2 MPa or more. When the tensile strength of the foam falls within the range, the non-slip material of the present invention can have very excellent mechanical physical properties. It should be noted that the tensile strength is a value measured in conformity with JIS-K-7113 at a tension speed of 50 mm/min.

The foam has a rate of change in tensile strength of preferably less than ±20%, more preferably ±18% or less, when stored at 125°C for 14 days. When the rate of change in tensile strength of the foam stored at 125°C for 14 days falls within the range, the non-slipmaterial of the present invention can have very excellent heat resistance. It should be noted that the rate of change in tensile strength is a rate of change between tensile strengths before and after the following heating storage treatment, the tensile strengths being measured before and after the storage in conformity with JIS-K-7113 at a tension speed of 50 mm/min: a measurement sample is stored in an oven at 125°C for 14 days.

When the foam is stored in a 50% compressed state at 80°C for 22 hours and then cooled to 23°C, and then 30 minutes lapse after the release of the compressed state, the foam has a 50% compression set recovery rate of preferably 70% or more, more preferably 75% or more. When heavy goods are placed on the foam having a 50% compression set recovery rate within the range or when a heavy load is applied thereto, a portion to which a pressure has been applied dents, but upon release of the pressure, the foam is excellent in recoverability of the dent (compression set recoverability). The use of such foam having excellent compression set recoverability can provide a non-slip material extremely excellent in repeatable usability.

Any appropriate material may be adopted as a formation material for the foam depending on purposes. In addition, any appropriate thickness may be adopted as the thickness of the foam depending on purposes.

### «A-2. Base material»

The non-slip material of the present invention may contain any appropriate base material in such a range that the effects of the present invention are not impaired. As a mode in which the non-slip material of the present invention contains a base material, for example, there is given such a mode that a base material layer is provided inside the non-slip material. Examples of such base material include a fiber woven fabric, a fiber nonwoven fabric, a fiber laminated fabric, a fiber knitted fabric, a resin sheet, a metal foil sheet, and an inorganic fiber. Any appropriate thickness may be adopted as the thickness of the base material depending on materials and purposes.

A woven fabric formed of any appropriate fiber may be adopted as the fiber woven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber woven fabric may be subjected to metallic processing through plating, sputtering, or the like.

A nonwoven fabric formed of any appropriate fiber may be adopted as the fiber nonwoven fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber nonwoven fabric may be subjected to metallic processing through plating, sputtering, or the like. A more specific example of the fiber nonwoven fabric is a spunbond nonwoven fabric.

A laminated fabric formed of any appropriate fiber may be adopted as the fiber laminated fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber laminated fabric may be subjected to metallic processing through plating, sputtering, or the like. A more specific example of the fiber laminated fabric is a polyester fiber laminated fabric.

A knitted fabric formed of any appropriate fiber may be adopted as the fiber knitted fabric. Examples of such fiber include: natural fibers such as a plant fiber, an animal fiber, and a mineral fiber; and artificial fibers such as a regenerated fiber, a synthetic fiber, a semi-synthetic fiber, and an artificial inorganic fiber. An example of the synthetic fiber is a fiber obtained by melt-spinning a thermoplastic fiber. Further, the fiber knitted fabric may be subjected to metallic processing through plating, sputtering, or the like.

A sheet formed of any appropriate resin may be adopted as the resin sheet. An example of such resin is a thermoplastic resin. The resin sheet may be subjected to metallic processing through plating, sputtering, or the like.

A sheet formed of any appropriate metal foil may be adopted as the metal foil sheet.

Any appropriate inorganic fiber may be adopted as the inorganic fiber. Specific examples of such inorganic fiber include a glass fiber, a metal fiber, and a carbon fiber.

In the non-slip material of the present invention, when voids are present in the base material, the same material as that for the foam may be present in part or all of the voids.

The base materials may be used alone or in combination.

### «A-3. Pressure-sensitive adhesive layer»

The non-slip material of the present invention may contain any appropriate pressure-sensitive adhesive layer in such a range that the effects of the present invention are not impaired. A mode in which the non-slip material of the present invention contains the pressure-sensitive adhesive layer is, for example, a mode in which the pressure-sensitive adhesive layer is provided on one surface of the foam or a laminate of the foams and the base material (first foam/base material/second foam). Any appropriate pressure-sensitive adhesive may be used as a pressure-sensitive adhesive for forming the pressure-sensitive adhesive layer depending on, for example, purposes. Examples thereof include an acrylic pressure-sensitive adhesive, a rubber-based pressure-sensitive adhesive, an epoxy resin-based pressure-sensitive adhesive, and a silicone-based pressure-sensitive adhesive. The pressure-sensitive adhesives may be used alone in combination.

A pressure-sensitive adhesive using, as a base polymer, a homopolymer of a (meth) acrylic acid alkyl ester whose alkyl group has 1 to 18 carbon atoms or a copolymer of the (meth) acrylic acid alkyl ester and any other copolymerizable monomer such as a functional monomer may be preferably used as the acrylic pressure-sensitive adhesive. The copolymer of the (meth) acrylic acid alkyl ester and the other copolymerizable monomer is preferably a copolymer obtained by copolymerizing a monomer composition containing 50 wt% or more, more preferably 60 wt% or more of the (meth) acrylic acid alkyl ester.

Examples the (meth)acrylic acid alkyl ester include methyl (meth)acrylate, ethyl (meth)acrylate, butyl (meth)acrylate, isobutyl (meth)acrylate, hexyl (meth)acrylate, octyl (meth)acrylate, 2-ethylhexyl (meth)acrylate, isooctyl (meth)acrylate, decyl (meth)acrylate, isodecyl (meth)acrylate, lauryl (meth)acrylate, and stearyl (meth)acrylate.

Examples of the functional monomer include a monomer having a hydroxyl group, a monomer having a carboxyl group, a monomer having an amide group, and a monomer having an amino group. Examples of the monomer having a hydroxyl group include hydroxyalkyl (meth)acrylates such as 2-hydroxyethyl (meth)acrylate and hydroxypropyl (meth)acrylate. Examples of the monomer having a carboxyl group include: α,β-unsaturated carboxylic acids such as acrylic acid, methacrylic acid, and crotonic acid; maleic acid monoalkyl esters such as butyl maleate; unsaturated dibasic acids such as maleic acid, fumaric acid, and itaconic acid; and dibasic acid anhydrides such as maleic anhydride. Examples of the monomer having an amide group include: alkyl(meth)acrylamides such as acrylamide, dimethyl(meth)acrylamide, and diethyl(meth)acrylamide; N-alkoxymethyl(meth)acrylamides such as N-butoxylmethyl(meth)acrylamide and N-ethoxymethyl(meth)acrylamide; and diacetone(meth)acrylamide. An example of the monomer having an amino group is dimethylaminoethyl (meth)acrylate. As a copolymerizable monomer other than the monomers described above, there may be used, for example, vinyl acetate, styrene, α-methylstyrene, vinyl chloride, acrylonitrile, ethylene, or propylene.

An example of the rubber-based pressure-sensitive adhesive is a pressure-sensitive adhesive using, as a base polymer, a rubber elastic body such as natural rubber, a styrene-isoprene-based block copolymer, a styrene-butadiene-based block copolymer, polyisoprene, polybutene, polyisobutylene, or an ethylene-vinyl acetate copolymer. In addition to the rubber elastic body, for example, the following tackifier may be compounded in the rubber-based pressure-sensitive adhesive in an appropriate amount: a rosin-based resin, apolyterpeneresin, a coumarone-indene resin, a petroleum-based resin, or a terpene-phenol resin. In addition, as required, for example, the following softening agent may be compounded: liquid polybutene, a mineral oil, liquid polyisoprene, or liquid polyacrylate.

An example of the silicone-based pressure-sensitive adhesive is a pressure-sensitive adhesive containing silicone rubber and a silicone resin. As the silicone rubber and the silicone resin, there may be used any appropriate silicone-based rubber component and resin used in a general silicone-based pressure-sensitive adhesive.

The pressure-sensitive adhesive layer may contain any appropriate support depending on, for example, purposes. A mode in which the pressure-sensitive adhesive layer contains the support is, for example, a mode in which a layer of the support is provided in the pressure-sensitive adhesive layer. The pressure-sensitive adhesive layer containing the support may be of, for example, a construction "first pressure-sensitive adhesive layer/support/second pressure-sensitive adhesive layer." Examples of such support include a fiber woven fabric, a fiber nonwoven fabric, a fiber laminated fabric, a fiber knitted fabric, a resin sheet, a metal foil sheet, and an inorganic fiber, and the same description as that in the section A-2 is applicable to details thereof. The support may be formed of one kind of material, or may be formed of two or more kinds of materials. In addition, the support may be a single layer or may be a laminate. Any appropriate thickness may be adopted as the thickness of the support depending on its material and purposes.

The thickness of the pressure-sensitive adhesive layer (the total thickness in the case of a laminated structure) may be, for example, 5 µm to 500 µm, preferably 5 µm to 200 µm.

### «B. Non-slip material production method 1»

The non-slip material of the present invention may be produced by any appropriate method. For example, the non-slip material of the present invention formed of the foam may be obtained by a production method for the foam to be described in detail below.

An example of the production method for the foam is a "continuous method" involving continuously supplying an emulsifying machine with a continuous oil phase component and an aqueous phase component to prepare a W/O emulsion which may be used for obtaining the foam, subsequently polymerizing the resultant W/O emulsion to produce a water-containing polymer, and subsequently dehydrating the resultant water-containing polymer. Another example of the production method for the foam is a "batch method" involving feeding an emulsifying machine with an appropriate amount of an aqueous phase component with respect to a continuous oil phase component, continuously supplying the aqueous phase component with stirring to prepare a W/O emulsion which may be used for obtaining the foam, polymerizing the resultant W/O emulsion to produce a water-containing polymer, and subsequently dehydrating the resultant water-containing polymer.

A continuous polymerization method involving continuously polymerizing a W/O emulsion is a preferred method because its production efficiency is high and an effect of shortening a polymerization time and shortening of a polymerization apparatus can be most effectively utilized.

More specifically, the production method for the foam involves:
a step (I) of preparing a W/O emulsion;
a step (II) of forming the resultant W/O emulsion into a shape;
a step (III) of polymerizing the W/O emulsion formed into a shape; and
a step (IV) of dehydrating the resultant water-containing polymer. Herein, at least part of the step (II) of forming the resultant W/O emulsion into a shape and the step (III) of polymerizing the W/O emulsion formed into a shape may be simultaneously performed.

### «B-1. Step (I) of preparing W/O emulsion»

The W/O emulsion is a W/O emulsion including a continuous oil phase component and an aqueous phase component immiscible with the continuous oil phase component. More specifically, the W/O emulsion is obtained by dispersing the aqueous phase component in the continuous oil phase component.

The ratio of the aqueous phase component to the continuous oil phase component in the W/O emulsion may be any appropriate ratio in such a range that the W/O emulsion can be formed. The ratio of the aqueous phase component to the continuous oil phase component in the W/O emulsion can serve as an important factor for determining structural, mechanical, and performance characteristics of a porous polymer material to be obtained by the polymerization of the W/O emulsion. Specifically, the ratio of the aqueous phase component to the continuous oil phase component in the W/O emulsion which may be used for obtaining the foam can serve as an important factor for determining, for example, the density, cell size, cell structure, and dimensions of a wall body for forming a porous structure of a porous polymer material to be obtained by the polymerization of the W/O emulsion.

The lower limit value of the ratio of the aqueous phase component in the W/O emulsion is preferably 30 wt%, more preferably 40 wt%, still more preferably 50 wt%, particularly preferably 55 wt%, and the upper limit value thereof is preferably 95 wt%, more preferably 90 wt%, still more preferably 85 wt%, particularly preferably 80 wt%. When the ratio of the aqueous phase component in the W/O emulsion falls within the range, the effects of the present invention can be sufficiently expressed.

The W/O emulsion may include any appropriate additive in such a range that the effects of the present invention are not impaired. Examples of such additive include: a tackifier resin; talc; fillers such as calcium carbonate, magnesium carbonate, silicic acid and salts thereof, clay, mica powder, aluminum hydroxide, magnesium hydroxide, zinc oxide, bentonite, carbon black, silica, alumina, aluminum silicate, acetylene black, and aluminum powder; a pigment; and a dye. Such additives may be used alone or in combination.

Any appropriate method may be adopted as a production method for the W/O emulsion. Examples of the production method for the W/O emulsion which may be used for obtaining the foam include: a "continuous method" involving forming the W/O emulsion by continuously supplying an emulsifying machine with a continuous oil phase component and an aqueous phase component; and a "batch method" involving forming the W/O emulsion by feeding an emulsifying machine with an appropriate amount of an aqueous phase component with respect to a continuous oil phase component and continuously supplying the emulsifying machine with the aqueous phase component with stirring.

In the production of the W/O emulsion, as shearing means for obtaining an emulsion state, for example, there is given application of a high shearing condition using a rotor/stator mixer, a homogenizer, or a microfluidization apparatus. Further, as another shearing means for obtaining an emulsion state, for example, there is given shaking using an impeller mixer or a pin mixer, or gentle mixing of a continuous and dispersion phase through application of a low shearing condition using an electromagnetic stirrer bar. Specifically, for example, a "T.K. AGIHOMOMIXER" or "T.K. COMBIMIX" manufactured by PRIMIX Corporation can produce a target W/O emulsion under reduced pressure, and the inclusion of air bubbles in the W/O emulsion to be obtained can be significantly reduced.

As an apparatus for preparing the W/O emulsion by the "continuous method," for example, there are given a static mixer, a rotor/stator mixer, and a pin mixer. It is also possible to achieve more vigorous stirring by increasing a stirring speed or by using an apparatus designed so as to disperse the aqueous phase component more finely in the W/O emulsion in a mixing method.

As an apparatus for preparing the W/O emulsion by the "batch method," for example, there are given, mixing or shaking by hand, a driven impeller mixer, and a three-propeller mixing blade.

Any appropriate method may be adopted as a preparation method for the continuous oil phase component. A typical preferred example of the preparation method for the continuous oil phase component is a preparation method for a continuous oil phase component involving preparing a mixed syrup including a hydrophilic polyurethane-based polymer and an ethylenically unsaturated monomer and subsequently compounding the mixed syrup with a polymerization initiator, a cross-linking agent, and any other appropriate component.

Any appropriate method may be adopted as a preparation method for the hydrophilic polyurethane-based polymer. A typical example of the preparation method for the hydrophilic polyurethane-based polymer is a preparation method involving subjecting polyoxyethylene polyoxypropylene glycol and a diisocyanate compound to a reaction in the presence of a urethane reaction catalyst.

### <<B-1-1. Aqueous phase component>>

Any aqueous fluid substantially immiscible with the continuous oil phase component may be adopted as the aqueous phase component. Water such as ion-exchanged water is preferred from the viewpoints of ease of handling and low cost.

The aqueous phase component may include any appropriate additive in such a range that the effects of the present invention are not impaired. Examples of such additive include a polymerization initiator and a water-soluble salt. The water-soluble salt can serve as an effective additive for additionally stabilizing the W/O emulsion. Examples of such water-soluble salt include sodium carbonate, calcium carbonate, potassium carbonate, sodium phosphate, calcium phosphate, potassium phosphate, sodium chloride, and potassium chloride. Such additives may be used alone or in combination. The additives which may be included in the aqueous phase component may be used alone or in combination.

### <B-1-2. Continuous oil phase component>

The continuous oil phase component includes a hydrophilic polyurethane-based polymer, an ethylenically unsaturated monomer, and a cross-linking agent. The content of each of the hydrophilic polyurethane-based polymer and the ethylenically unsaturated monomer in the continuous oil phase component may be any appropriate content in such a range that the effects of the present invention are not impaired.

The content of the hydrophilic polyurethane-based polymer, which depends on the ratio of polyoxyethylene in a polyoxyethylene polyoxypropylene glycol unit constituting the hydrophilic polyurethane-based polymer or the amount of the aqueous phase component to be compounded, is as described below, for example. The hydrophilic polyurethane-based polymer is preferably contained in the range of 10 to 30 parts by weight with respect to 70 to 90 parts by weight of the ethylenically unsaturated monomer, and the hydrophilic polyurethane-based polymer is more preferably contained in the range of 10 to 25 parts by weight with respect to 75 to 90 parts by weight of the ethylenically unsaturated monomer. Further, for example, the hydrophilic polyurethane-based polymer is preferably contained in the range of 1 to 30 parts by weight, and the hydrophilic polyurethane-based polymer is more preferably contained in the range of 1 to 25 parts by weight, with respect to 100 parts by weight of the aqueous phase component. When the content of the hydrophilic polyurethane-based polymer falls within the range, the effects of the present invention can be sufficiently expressed.

### <<B-1-2-1. Hydrophilic polyurethane-based polymer>>

The hydrophilic polyurethane-based polymer includes a polyoxyethylene polyoxypropylene unit derived from polyoxyethylene polyoxypropylene glycol, and the polyoxyethylene polyoxypropylene unit preferably contains 5 wt% to 25 wt% of polyoxyethylene.

The content of the polyoxyethylene in the polyoxyethylene polyoxypropylene unit is preferably 5 wt% to 25 wt% as described above, the lower limit value thereof is preferably 10 wt%, more preferably 15 wt%, and the upper limit value thereof is preferably 25 wt%, more preferably 20 wt%. The polyoxyethylene in the polyoxyethylene polyoxypropylene unit expresses an effect of stably dispersing an aqueous phase component in a continuous oil phase component. When the content of the polyoxyethylene in the polyoxyethylene polyoxypropylene unit is less than 5 wt%, it may become difficult to stably disperse the aqueous phase component in the continuous oil phase component. When the content of the polyoxyethylene in the polyoxyethylene polyoxypropylene unit is more than 25 wt%, as the condition becomes closer to an HIPE condition, phase transition from a W/O emulsion to an oil-in-water (O/W) emulsion may occur.

A conventional hydrophilic polyurethane-based polymer is obtained by subjecting a diisocyanate compound, a hydrophobic long-chain diol, polyoxyethylene glycol and a derivative thereof, and a low-molecular active hydrogen compound (chain extension agent) to a reaction. However, the number of polyoxyethylene groups included in the hydrophilic polyurethane-based polymer obtained by such method is non-uniform, and hence a W/O emulsion including such hydrophilic polyurethane-based polymer may have lowered emulsification stability. On the other hand, the hydrophilic polyurethane-based polymer included in the continuous oil phase component of the W/O emulsion has such a characteristic structure as described above. Accordingly, in the case where the hydrophilic polyurethane-based polymer is incorporated into the continuous oil phase component of the W/O emulsion, excellent emulsifiability and excellent static storage stability can be expressed even when an emulsifying agent or the like is not positively added.

The hydrophilic polyurethane-based polymer is preferably obtained by subj ecting polyoxyethylene polyoxypropylene glycol and a diisocyanate compound to a reaction. In this case, the lower limit value of the ratio of the polyoxyethylene polyoxypropylene glycol and the diisocyanate compound in terms of NCO/OH (equivalent ratio) is preferably 1, more preferably 1.2, still more preferably 1.4, particularly preferably 1.6, and the upper limit value thereof is preferably 3, more preferably 2.5, still more preferably 2. When the ratio in terms of NCO/OH (equivalent ratio) is less than 1, a gelled product may be liable to be generated in the production of the hydrophilic polyurethane-based polymer. When the ratio in terms of NCO/OH (equivalent ratio) is more than 3, the remaining amount of the diisocyanate compound increases, which may make the W/O emulsion unstable.

Examples of the polyoxyethylene polyoxypropylene glycol include polyether polyols manufactured by ADEKA CORPORATION (ADEKA (trademark) Pluronic L-31, L-61, L-71, L-101, L-121, L-42, L-62, L-72, L-122, 25R-1, 25R-2, and 17R-2), and polyoxyethylene polyoxypropylene glycols manufactured by NOF CORPORATION (PLONON (trademark) 052, 102, and 202). The polyoxyethylene polyoxypropylene glycols may be used alone or in combination.

Examples of the diisocyanate compound include aromatic, aliphatic, and alicyclic diisocyanates, dimers and trimers of these diisocyanates, and polyphenylmethane polyisocyanate. Examples of the aromatic, aliphatic, and alicyclic diisocyanates include tolylene diisocyanate, diphenylmethane diisocyanate, hexamethylene diisocyanate, xylylene diisocyanate, hydrogenated xylylene diisocyanate, isophorone diisocyanate, hydrogenated diphenylmethane diisocyanate, 1,5-naphthylene diisocyanate, 1,3-phenylene diisocyanate, 1,4-phenylene diisocyanate, butane-1,4-diisocyanate, 2,2,4-trimethylhexamethylene diisocyanate, 2,4,4-trimethylhexamethylene diisocyanate, cyclohexane-1,4-diisocyanate, dicyclohexylmethane-4,4-diisocyanate, 1,3-bis(isocyanatomethyl)cyclohexane, methylcyclohexane diisocyanate, and m-tetramethylxylylene diisocyanate. Examples of the trimers of the diisocyanates include an isocyanurate type, a biuret type, and an allophanate type. The diisocyanate compounds may be used alone or in combination.

The kind, combination, or the like of the diisocyanate compounds has only to be appropriately selected from the viewpoint of, for example, urethane reactivity with polyol. An alicyclic diisocyanate is preferably used from the viewpoints of, for example, rapid urethane reactivity with polyol and suppression of a reaction with water.

The lower limit value of the weight average molecular weight of the hydrophilic polyurethane-based polymer is preferably 5,000, more preferably 7,000, still more preferably 8,000, particularly preferably 10,000, and the upper limit value thereof is preferably 50, 000, more preferably 40, 000, still more preferably 30,000, particularly preferably 20,000.

The hydrophilic polyurethane-based polymer may have a radically polymerizable unsaturated double bond at a terminal thereof. By virtue of the fact that the hydrophilic polyurethane-based polymer has a radically polymerizable unsaturated double bond at a terminal thereof, the effects of the present invention can be additionally expressed.

### <<B-1-2-2. Ethylenically unsaturated monomer>>

Any appropriate monomer may be adopted as the ethylenically unsaturated monomer as long as the monomer has an ethylenically unsaturated double bond. The ethylenically unsaturated monomers may be used alone or in combination.

The ethylenically unsaturated monomer preferably includes a (meth) acrylic acid ester. The lower limit value of the content of the (meth)acrylic acid ester in the ethylenically unsaturated monomer is preferably 80 wt%, more preferably 85 wt%, and the upper limit value thereof is preferably 100 wt%, more preferably 98 wt%. The (meth) acrylic acid esters may be used alone or in combination.

The (meth)acrylic acid ester is preferably an alkyl (meth)acrylate having an alkyl group (concept encompassing a cycloalkyl group, an alkyl(cycloalkyl) group, and a (cycloalkyl) alkyl group as well) having 1 to 20 carbon atoms. The alkyl group preferably has 4 to 18 carbon atoms. It should be noted that the term "(meth)acrylic" means acrylic and/or methacrylic, and the term "(meth)acrylate" means acrylate and/or methacrylate.

Examples of the alkyl (meth)acrylate having an alkyl group having 1 to 20 carbon atoms include methyl (meth)acrylate, ethyl (meth)acrylate, propyl (meth)acrylate, n-butyl (meth)acrylate, s-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, isomyristyl (meth)acrylate, n-tridecyl (meth)acrylate, n-tetradecyl (meth)acrylate, stearyl (meth)acrylate, lauryl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, and isostearyl (meth)acrylate. Of those, n-butyl (meth)acrylate and 2-ethylhexyl (meth)acrylate are preferred. The alkyl (meth)acrylates each having an alkyl group having 1 to 20 carbon atoms may be used alone or in combination.

The ethylenically unsaturated monomer preferably further contains a polar monomer copolymerizable with the (meth) acrylic acid ester. The lower limit value of the content of the polar monomer in the ethylenically unsaturated monomer is preferably 0 wt%, more preferably 2 wt%, and the upper limit value thereof is preferably 20 wt%, more preferably 15 wt%. The polar monomers may be used alone or in combination.

Examples of the polar monomer include: carboxyl group-containing monomers such as (meth) acrylic acid, carboxyethyl (meth)acrylate, carboxypentyl (meth)acrylate, ω-carboxy-polycaprolactone monoacrylate, phthalic acid monohydroxyethyl acrylate, itaconic acid, maleic acid, fumaric acid, and crotonic acid; acid anhydride monomers such as maleic anhydride and itaconic anhydride; hydroxyl group-containing monomers such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, and (4-hydroxymethylcyclohexyl)methyl (meth)acrylate: and amide group-containing monomers such as N,N-dimethyl(meth)acrylamide, N,N-diethyl(meth)acrylamide, and hydroxyethyl(meth)acrylamide.

### <<B-1-2-3. Polymerization initiator>>

The continuous oil phase component preferably includes a polymerization initiator.

Examples of the polymerization initiator include a radical polymerization initiator and a redox polymerization initiator. Examples of the radical polymerization initiator include a thermal polymerization initiator and a photopolymerization initiator.

Examples of the thermal polymerization initiator include an azo compound, a peroxide, peroxycarbonic acid, a peroxycarboxylic acid, potassium persulfate, t-butyl peroxyisobutyrate, and 2,2'-azobisisobutyronitrile.

Examples of the photopolymerization initiator may include: acetophenone-based photopolymerization initiators such as 4-(2-hydroxyethoxy)phenyl (2-hydroxy-2-propyl) ketone (e.g., a product available under the trade name Darocur-2959 from Ciba Japan), α-hydroxy-α,α'-dimethylacetophenone (e.g., a product available under the trade name Darocur-1173 from Ciba Japan), methoxyacetophenone, 2,2-dimethoxy-2-phenylacetophenone (e.g., a product available under the trade name Irgacure-651 from Ciba Japan), and 2-hydroxy-2-cyclohexylacetophenone (e.g., a product available under the trade name Irgacure-184 from Ciba Japan); ketal-based photopolymerization initiators such as benzyl dimethyl ketal; other halogenated ketones; and acylphosphine oxides (e.g., a product available under the trade name Irgacure-819 from Ciba Japan).

The polymerization initiators may be used alone or in combination.

The lower limit value of the content of the polymerization initiator is preferably 0.05 wt%, more preferably 0.1 wt%, and the upper limit value thereof is preferably 5.0 wt%, more preferably 1.0 wt%, with respect to the whole continuous oil phase component. When the content of the polymerization initiator is less than 0.05 wt% with respect to the whole continuous oil phase component, the amount of unreacted monomer components increases, with the result that the amount of monomers remaining in a porous material to be obtained may increase. When the content of the polymerization initiator is more than 5.0 wt% with respect to the whole continuous oil phase component, the mechanical physical properties of a porous material to be obtained may lower.

It should be noted that the amount of radicals generated by the photopolymerization initiator varies depending on, for example, the kind, intensity, and irradiation time of irradiation light and the amount of dissolved oxygen in a mixture of a monomer and a solvent as well. In addition, when the amount of dissolved oxygen is large, the amount of radicals generated by the photopolymerization initiator is suppressed, and thus polymerization does not sufficiently proceed, with the result that the amount of an unreacted product may increase. Accordingly, it is preferred to blow inert gas such as nitrogen into a reaction system to replace oxygen by the inert gas or to perform degassing by reduced pressure treatment in advance before photoirradiation.

### <<B-1-2-4. Cross-linking agent>>

The continuous oil phase component includes a cross-linking agent.

The cross-linking agent is typically used for constructing a more three-dimensional molecular structure by linking polymer chains together. The selection of the kind and content of the cross-linking agent is influenced by structural characteristics, mechanical characteristics, and fluid treatment characteristics desired for a porous material to be obtained. The selection of the specific kind and content of the cross-linking agent is important for realizing a desired combination of the structural characteristics, mechanical characteristics, and fluid treatment characteristics of the porous material.

In the production method for the foam, it is preferred that at least two kinds of cross-linking agents having different weight average molecular weights be each used as the cross-linking agent.

In the production method for the foam, it is more preferred to use, as the cross-linking agent, "one or more kinds selected from a polyfunctional (meth)acrylate, a polyfunctional (meth)acrylamide, and a polymerization-reactive oligomer each having a weight averagemolecular weight of 800 ormore" in combination with "one or more kinds selected from a polyfunctional (meth) acrylate and a polyfunctional (meth) acrylamide each having a weight average molecular weight of 500 or less." Herein, the polyfunctional (meth)acrylate specifically refers to a polyfunctional (meth) acrylate having at least two ethylenically unsaturated groups per molecule, and the polyfunctional (meth) acrylamide specifically refers to a polyfunctional (meth)acrylamide having at least two ethylenically unsaturated groups per molecule.

Examples of the polyfunctional (meth) acrylate include diacrylates, triacrylates, tetraacrylates, dimethacrylates, trimethacrylates, and tetramethacrylates.

Examples of the polyfunctional (meth)acrylamide include diacrylamides, triacrylamides, tetraacrylamides, dimethacrylamides, trimethacrylamides, and tetramethacrylamides.

The polyfunctional (meth) acrylate may be derived from, for example, a diol, a triol, a tetraol, or a bisphenol A derivative. Specifically, the polyfunctional (meth) acrylate may be derived from, for example, 1,10-decanediol, 1,8-octanediol, 1,6-hexanediol, 1,4-butanediol, 1,3-butanediol, 1,4-but-2-enediol, ethylene glycol, diethylene glycol, trimethylolpropane, pentaerythritol, hydroquinone, catechol, resorcinol, triethylene glycol, polyethylene glycol, sorbitol, polypropylene glycol, polytetramethylene glycol, or a propylene oxide-modified product of bisphenol A.

The polyfunctional (meth) acrylamide may be derived from, for example, its corresponding diamine, triamine, or tetraamine.

Examples of the polymerization-reactive oligomer include urethane (meth)acrylate, epoxy (meth)acrylate, copolyester (meth)acrylate, and oligomer di(meth)acrylate. Hydrophobic urethane (meth)acrylate is preferred.

The weight average molecular weight of the polymerization-reactive oligomer is preferably 1,500 or more, more preferably 2,000 or more. The upper limit of the weight average molecular weight of the polymerization-reactive oligomer is not particularly limited, but is, for example, preferably 10,000 or less.

When the "one or more kinds selected from a polyfunctional (meth)acrylate, a polyfunctional (meth)acrylamide, and a polymerization-reactive oligomer each having a weight average molecular weight of 800 or more" and the "one or more kinds selected from a polyfunctional (meth)acrylate and a polyfunctional (meth) acrylamide each having a weight average molecular weight of 500 or less" are used in combination as the cross-linking agent, the lower limit value of the usage of the "one or more kinds selected from a polyfunctional (meth)acrylate, a polyfunctional (meth)acrylamide, and a polymerization-reactive oligomer each having a weight average molecular weight of 800 or more" is preferably 30 wt%, and the upper limit value thereof is preferably 100 wt%, more preferably 80 wt%, with respect to the total amount of the hydrophilic polyurethane-based polymer and the ethylenically unsaturated monomer in the continuous oil phase component. When the usage of the "one or more kinds selected from a polyfunctional (meth)acrylate, a polyfunctional (meth)acrylamide, and a polymerization-reactive oligomer each having a weight average molecular weight of 800 or more" is less than 30 wt% with respect to the total amount of the hydrophilic polyurethane-based polymer and the ethylenically unsaturated monomer in the continuous oil phase component, the cohesive strength of a foam to be obtained may lower, and it may become difficult to achieve both of toughness and flexibility. When the usage of the "one or more kinds selected from a polyfunctional (meth)acrylate, a polyfunctional (meth)acrylamide, and a polymerization-reactive oligomer each having a weight average molecular weight of 800 or more" is more than 100 wt% with respect to the total amount of the hydrophilic polyurethane-based polymer and the ethylenically unsaturated monomer in the continuous oil phase component, the emulsification stability of the W/O emulsion lowers, with the result that a desired foam may not be obtained.

When the "one or more kinds selected from a polyfunctional (meth)acrylate, a polyfunctional (meth)acrylamide, and a polymerization-reactive oligomer each having a weight average molecular weight of 800 or more" and the "one or more kinds selected from a polyfunctional (meth)acrylate and a polyfunctional (meth) acrylamide each having a weight average molecular weight of 500 or less" are used in combination as the cross-linking agent, the lower limit value of the usage of the "one or more kinds selected from a polyfunctional (meth)acrylate and a polyfunctional (meth) acrylamide each having a weight average molecular weight of 500 or less" is preferably 1 wt%, more preferably 5 wt%, and the upper limit value thereof is preferably 30 wt%, more preferably 20 wt%, with respect to the total amount of the hydrophilic polyurethane-based polymer and the ethylenically unsaturated monomer in the continuous oil phase component. When the usage of the "one or more kinds selected from a polyfunctional (meth) acrylate and a polyfunctional (meth) acrylamide each having a weight average molecular weight of 500 or less" is less than 1 wt% with respect to the total amount of the hydrophilic polyurethane-based polymer and the ethylenically unsaturated monomer in the continuous oil phase component, heat resistance lowers, with the result that a cell structure may collapse owing to shrinkage in the step (IV) of dehydrating a water-containing polymer. When the usage of the "one or more kinds selected from a polyfunctional (meth)acrylate and a polyfunctional (meth) acrylamide each having a weight average molecular weight of 500 or less" is more than 30 wt% with respect to the total amount of the hydrophilic polyurethane-based polymer and the ethylenically unsaturated monomer in the continuous oil phase component, the toughness of a foam to be obtained lowers, with the result that the foam may exhibit brittleness.

The cross-linking agents may be used alone or in combination.

### <<B-1-2-5. Other components in continuous oil phase component>>

The continuous oil phase component may include any appropriate other component in such a range that the effects of the present invention are not impaired. Typical preferred examples of such other component include a catalyst, an antioxidant, a light stabilizer, and an organic solvent. Such other components may be used alone or in combination.

Examples of the catalyst include a urethane reaction catalyst. Any appropriate catalyst may be adopted as the urethane reaction catalyst. Specific examples thereof include dibutyltin dilaurate and an acetylacetone metal complex.

Any appropriate content may be adopted as the content of the catalyst depending on a catalytic reaction of interest.

The catalysts may be used alone or in combination.

Examples of the antioxidant include a phenol-based antioxidant, a thioether-based antioxidant, and a phosphorus-based antioxidant.

Any appropriate content may be adopted as the content of the antioxidant in such a range that the effects of the present invention are not impaired.

The antioxidants may be used alone or in combination.

Any appropriate light stabilizer may be adopted as the light stabilizer in such a range that the effects of the present invention are not impaired.

Any appropriate content may be adopted as the content of the light stabilizer in such a range that the effects of the present invention are not impaired.

The light stabilizers may be used alone or in combination.

Any appropriate organic solvent may be adopted as the organic solvent in such a range that the effects of the present invention are not impaired.

Any appropriate content may be adopted as the content of the organic solvent in such a range that the effects of the present invention are not impaired.

The organic solvents maybe used alone or in combination.

### «B-2. Step (II) of forming W/O emulsion into shape»

In the step (II), any appropriate shape formation method may be adopted as the method of forming the W/O emulsion into a shape. For example, there is given a method involving continuously supplying the W/O emulsion on a moving belt and forming the emulsion into a flat sheet shape on the belt. Further, there is given a method involving applying the W/O emulsion onto one surface of a thermoplastic resin film to form the emulsion into a shape.

In the step (II), when the method involving applying the W/O emulsion onto one surface of a thermoplastic resin film to form the emulsion into a shape is adopted as the method of forming the W/O emulsion into a shape, the application method is, for example, a method using a roll coater, a die coater, or a knife coater.

### «B-3. Step (III) of polymerizing W/O emulsion formed into shape»

In the step (III), any appropriate polymerization method may be adopted as the method of polymerizing the W/O emulsion formed into a shape. For example, there are given: a method involving continuously supplying the W/O emulsion onto a moving belt having a structure in which a belt surface of a belt conveyor is warmed with a heating apparatus and polymerizing the emulsion by heating while forming the emulsion into a flat sheet shape on the belt; and a method involving continuously supplying the W/O emulsion onto a moving belt having a structure in which a belt surface of a belt conveyor is warmed by irradiation with active energy rays and polymerizing the emulsion by irradiation with active energy rays while forming the emulsion into a flat sheet shape on the belt.

When the polymerization is performed by heating, the lower limit value of a polymerization temperature (heating temperature) is preferably 23°C, more preferably 50°C, still more preferably 70°C, particularly preferably 80°C, most preferably 90°C, and the upper limit value thereof is preferably 150°C, more preferably 130°C, still more preferably 110°C. When the polymerization temperature is less than 23°C, it takes a long time to perform the polymerization, with the result that industrial productivity may lower. When the polymerization temperature is more than 150°C, the pore diameters of a foam to be obtained may become non-uniform, and the strength of the foam may lower. It should be noted that the polymerization temperature does not need to be kept constant, and for example, may be changed in two stages or a plurality of stages during the polymerization.

When the polymerization is performed by irradiation with active energy rays, examples of the active energy rays include UV light, visible light, and electron beams. The active energy rays are preferably UV light and visible light, more preferably visible to UV light having a wavelength of 200 nm to 800 nm. The W/O emulsion has a strong tendency to scatter light. Accordingly, when the visible to UV light having a wavelength of 200 nm to 800 nm is used, the light can pass through the W/O emulsion. Further, a photopolymerization initiator which can be activated by the light having a wavelength of 200 nm to 800 nm is easily available, and a source for the light is also easily available.

The lower limit value of the wavelength of the active energy rays is preferably 200 nm, more preferably 300 nm, and the upper limit value thereof is preferably 800 nm, more preferably 450 nm.

As a typical apparatus to be used in the irradiation with active energy rays, for example, there is given an apparatus having a spectrum distribution in a wavelength region of 300 to 400 nm as a UV lamp which can perform irradiation with UV light. Examples thereof include a chemical lamp, a Black Light lamp (manufactured by TOSHIBA LIGHTING & TECHNOLOGY CORPORATION, trade name), and a metal halide lamp.

An illuminance upon the irradiation with active energy rays maybe set to any appropriate illuminance by regulating a distance from an irradiation apparatus to an object to be irradiated and a voltage. For example, according to the method disclosed in JP 2003-13015 A, irradiation with UV light in each step can be performed in a plurality of divided stages, thereby precisely regulating the efficiency of a polymerization reaction.

In order to prevent oxygen having a polymerization-inhibiting action from causing an adverse influence, for example, the irradiation with UV light is preferably performed under an inert gas atmosphere after a W/O emulsion has been applied onto one surface of a base material such as a thermoplastic resin film and formed into a shape, or by covering with a film which transmits UV light but blocks oxygen, e.g., polyethylene terephthalate coated with a peeling agent such as silicone, after a W/O emulsion has been applied onto one surface of a base material such as a thermoplastic resin film and formed into a shape.

Any appropriate thermoplastic resin filmmay be adopted as the thermoplastic resin film as long as the W/O emulsion can be applied onto one surface of the film and formed into a shape. Examples of the thermoplastic resin film include plastic films and sheets made of polyester, an olefin-based resin, and polyvinyl chloride. In addition, one or both surfaces of the film may be subjected to peel treatment.

The inert gas atmosphere refers to an atmosphere in which oxygen in a photoirradiation zone has been replaced by inert gas. Accordingly, the amount of oxygen present in the inert gas atmosphere needs to be as small as possible, and is preferably 5,000 ppm or less in terms of oxygen concentration.

### «B-4. Step (IV) of dehydrating resultant water-containing polymer»

In the step (IV), the resultant water-containing polymer is dehydrated. An aqueous phase component is present in a dispersed state in the water-containing polymer obtained in the step (III). The foam is obtained by removing the aqueous phase component through dehydration to dry the polymer.

Any appropriate drying method may be adopted as the dehydration method in the step (IV). Examples of such drying method include vacuum drying, freeze drying, press drying, drying in a microwave oven, drying in a heat oven, drying with infrared rays, and combinations of these technologies.

### «C. Non-slip material production method 2»

When the non-slip material of the present invention includes the base material, as preferred production method for the non-slip material of the present invention, there is given a method of providing a non-slip material having a laminated structure of "foam layer/base material/foam layer," the method involving: preparing two W/O emulsion-applied sheets by applying a W/O emulsion onto one surface of a UV-transmitting filmcoatedwith a peeling agent such as silicone; polymerizing the W/O emulsion by heating or irradiation with active energy rays in a state in which a base material is laminated on the applied surface of one out of the two W/O emulsion-applied sheets and the other W/O emulsion-applied sheet is laminated on the other surface of the laminated base material so that its applied surface comes into contact with the base material, thereby producing a water-containing polymer; and dehydrating the resultant water-containing polymer.

When the base material is a sheet having air permeability such as a nonwoven fabric, the following method is given as another production method. The base material is laminated on a product obtained by applying the W/O emulsion onto one surface of a UV-transmitting film coated with a peeling agent such as silicone while tension is applied onto the product, the inside of the laminated base material is impregnated with the applied W/O emulsion, and another peel-treated film is laminated on a W/O emulsion layer formed on the base material by exudation. In this state, the W/O emulsion is polymerized by performing heating or irradiation with active energy rays to provide a water-containing polymer, and the resultant water-containing polymer is dehydrated to provide a non-slip material having a laminated structure "foam layer/base material/foam layer."

As a method of applying a W/O emulsion onto one surface of a base material or a UV-transmitting film coated with a peeling agent such as silicone, for example, there are given a roll coater, a die coater, and a knife coater.

### «D. Non-slip material production method 3»

When the non-slip material of the present invention includes the pressure-sensitive adhesive layer, apreferredproductionmethod for the non-slip material of the present invention is, for example, a method involving laminating the pressure-sensitive adhesive layer on one surface of the foam or the laminate of the foams and the base material obtained in the same manner as in the production method 1 or 2. Laminating means is not particularly limited, and the pressure-sensitive adhesive layer can be laminated by, for example, directly applying a pressure-sensitive adhesive composition containing a pressure-sensitive adhesive, a solvent, and the like onto the foam or the laminate of the foams and the base material, and drying the composition. Alternatively, the following may be performed: the pressure-sensitive adhesive layer is formed in advance by applying the pressure-sensitive adhesive composition onto the peeling film and drying the composition, and the pressure-sensitive adhesive layer is transferred onto one surface of the foam or the laminate. The non-slip material whose pressure-sensitive adhesive layer contains a support can be obtained by, for example, transferring the pressure-sensitive adhesive layer formed on the peeling film in the same manner as in the foregoing onto the support to provide each of both surfaces of the support with the pressure-sensitive adhesive layer, and attaching the resultant to one surface of the foam or the laminate of the foams and the base material.

### «E. Applications of non-slip material»

The non-slip material of the present invention is typically used to prevent a desired article placed thereon from slipping to move. Specific application examples of the non-slip material of the present invention include: non-slip materials for furniture such as a chair, a couch, and a desk, for rugs such as a carpet, a door mat, and a luncheon mat, for interior decorations such as a vase and various ornaments, and for electronic equipment such as a telephone, an electronic calculator, and a personal computer, and their peripheral members; sheet-feeding rollers for a copying machine, a printer, a multifunction machine, and the like; non-slip materials for radio transmission equipment; non-slip mats for a stair, a slope, and the like; non-slip materials for protective sheets such as a desk mat; non-slip materials for placing small articles such as a coin, glasses, a cellular phone, and an accessory on the dashboard of an automobile; gripping materials for a racket, a bat, a club, and the like; processing/holding materials for a semiconductor material, a color filter, and the like; and carrier sheets for a circuit board, a thin-film glass module, and the like. It should be noted that the surface on which the non-slip material itself of the present invention is placed is preferably smooth to the extent that its adhesion can be sufficiently exerted.

### «F. Temporary fixing material»

As described above, in one embodiment, the non-slip material of the present invention may be a temporary fixing material. Accordingly, according to another aspect of the present invention, a temporary fixing material is provided. Specifically, the temporary fixing material of the present invention is a temporary fixing material including a foam having an open-cell structure having through-holes between adjacent spherical cells, in which: the spherical cells have an average pore diameter of less than 20 µm; the through-holes have an average pore diameter of 5 µm or less; surface openings having an average pore diameter of 20 µm or less are present on its surface; and a normal shear adhesive strength is 1 N/cm² or more.

In a preferred embodiment, the temporary fixing material has a 180° peel test strength of 1 N/25 mm or less.

In a preferred embodiment, the temporary fixing material has a 60°C holding strength of 0.5 mm or less.

In a preferred embodiment, the temporary fixing material has a rate of dimensional change when stored at 125°C for 22 hours of less than ±5%.

In a preferred embodiment, when the temporary fixing material is stored in a 50% compressed state at 80°C for 22 hours and then cooled to 23°C, and then 30 minutes lapse after release of the compressed state, the temporary fixing material has a 50% compression set recovery rate of 70% or more.

In a preferred embodiment, the foam has a density of 0.15 g/cm³ to 0.6 g/cm³.

In a preferred embodiment, the foam has a cell content of 30% or more.

Details about the temporary fixing material of the present invention are as described in the sections A to D.

The temporary fixing material of the present invention is typically used to temporarily fix a desired article to the surface of any appropriate adherend. Specific application examples of the temporary fixing material of the present invention include: temporary fixing materials or temporary fixing boards for displaying or posting an advertisement, a calendar, a drawing, a memorandum, a photograph, various commercial products (e.g., portable electronic equipment such as a cellular phone and a portable game machine), and the like; temporary fixing materials for temporarily fixing a card, a coin, a touch pen, an accessory, and the like to a cellular phone and the like; temporary fixing materials or temporary fixing boards for placing small articles such as a coin, glasses, a cellular phone, and an accessory on the dashboard of an automobile; light-shielding sheets in a vehicle; temporary fixing materials for temporarily fixing objects to be charged on radio transmission charging equipment, the materials being laminated on the equipment; processing/holding materials for a semiconductor material, a color filter, and the like; carrier sheets for a circuit board, a thin-film glass module, and the like; alternative materials for a sucker, a magnet hook, and the like; wig-fixing materials; temporary fixing materials for a book stand, a book end and the like; board-shaped instructional materials or infant toys to and from which various products can be attached and peeled; pieces or boards for board games; files for re-sealing; alternative materials for MAGIC TAPE (trademark), MAGIC FASTENER (trademark), and the like; and dust-removing rollers. It should be noted that the surface of the adherend is preferably smooth to the extent that the adhesion of the temporary fixing material of the present invention can be sufficiently exerted.

### Examples

Hereinafter, the present invention is described by way of Examples. However, the present invention is not limited thereto. It should be noted that normal temperature means 23°C.

### (Measurement of molecular weight)

A weight average molecular weight was determined by gel permeation chromatography (GPC).
Apparatus: "HLC-8020" manufactured by Tosoh Corporation
Column: "TSKgel GMH_{HR}-H(20)" manufactured by Tosoh Corporation
Solvent: Tetrahydrofuran
Standard substance: Polystyrene

### (Measurement of average pore diameter)

A produced foam sheet was cut in its thickness direction with a microtome cutter to prepare a sample for measurement. Images of the cut surface of the sample for measurement were taken at magnifications of 800 to 5,000 with a low-vacuum scanning electron microscope (manufactured by Hitachi, Ltd., S-3400N). Through use of the resultant images, the long axis lengths of about 30 largest pores were measured for each of spherical cells, through-holes, and surface openings in any appropriate range, and an average of the measured values was defined as an average pore diameter.

### (180° Bending test)

A produced foam was cut in its machine direction (MD) or transverse direction (TD) to prepare samples for measurement each having a size of 100 mm by 100 mm. Each of the samples for measurement was bent by 180° in its longitudinal direction at a bending position about 50 mm away from each of its end portions so that the end portions overlapped each other. After that, one reciprocation of a 1-kg roller was performed from the overlapped end portion side toward the bending position side, and then the generation status of a crack at the bending position was visually observed. The number of the samples measured was n=3.

### (Measurement of density of foam (or foam portion))

The resultant foam (or foam portion) was cut into five test pieces each having a size of 100 mm by 100 mm. The weights were divided by the volumes to determine bulk densities. An average value of the resultant bulk densities was defined as a density of the foam (or foam portion).

### (Measurement of cell content)

Only an oil phase component in the production of an emulsion was polymerized, and the resultant polymer sheet was cut into five test pieces each having a size of 100 mm by 100 mm. The weights were divided by the volumes to determine bulk densities. An average value of the resultant bulk densities was defined as a density of a resin component constituting the foam (or foam portion). The cell content of the foam (or foam portion) was calculated according to the following equation through use of a relative density obtained by dividing the density of the foam (or foam portion) by the density of the resin component. $Cell content = \left(1-Relative density\right) \times 100$

### (Measurement of normal shear adhesive strength)

The resultant foam or the like was cut into pieces each having a size of 20 mm by 20 mm, which were used as samples. A BA plate (SUS304) was attached to each of both surfaces of the samples of the foam or the like, and crimping was performed by one reciprocation of a 2-kg roller on the samples in a horizontal attitude. After the crimping, each of the samples was left to stand at normal temperature overnight, fixed to Tensilon at normal temperature so as to be perpendicular, pulled at a tension speed of 50 mm/min, and measured for its shearing adhesive strength in the middle of the pulling. The number of the samples measured was n=2, and an average of the measured values was defined as a normal shear adhesive strength.

### (Measurement of 180° peel test strength)

The resultant foam or the like was cut into pieces each having a size of 25 mm by 100 mm, which were used as samples. Each of the samples, from which one of the separators was peeled off, was attached toaBAplate (SUS304), and crimping was performed by one reciprocation of a 2-kg roller. After the crimping, each of the samples was left to stand at normal temperature for 30 minutes, subjected to peeling in a 180-degree direction at a tension speed of 50 mm/min through use of Tensilon, and measured for its peel adhesive strength in the middle of the peeling. The number of the samples measured was n=2, and an average of the measured values was defined as a 180° peel test strength. It should be noted that the 180° peel test strength of a non-slip material including a pressure-sensitive adhesive lay was measured by attaching its surface on the foam side to the BA plate.

### (Measurement of 60°C holding strength)

The resultant foam or the like was cut into a piece having a size of 10 mm by 100 mm, which was used as a sample. The sample, from which one of the separators was peeled off, was attached to a bakelite plate so as to achieve an attachment area of 10 mm by 20 mm, and crimping was performed by one reciprocation of a 2-kg roller. After the crimping, under a 60°C atmosphere, the bakelite plate was fixed so that the sample was perpendicular, a load of 500 g was applied to one non-slip material, and the sample was left to stand for 2 hours. The sample after left to stand for 2 hours was measured for its amount of deviation in attachment position. It should be noted that the 60% holding strength of a non-slip material including a pressure-sensitive adhesive layer was measured by attaching its surface on the foam side to the bakelite plate.

### (Measurement of 50% compressive load)

Ten sheets of the resultant foam or the like were laminated together and then cut into pieces each having a size of 20 mm by 20 mm, which were used as samples for measurement. Tensilon was used for the measurement, each of the samples for measurement was compressed in its thickness direction at a speed of 10 mm/min until the thickness reached 50% of the initial thickness, and a maximum value at the time when the thickness was reduced by 50% was measured. The number of the samples measured was n=2, and an average of the measured values was defined as a 50% compressive load.

### (Measurement of 50% compression set recovery rate)

The 50% compression set recovery rate (80°C atmosphere, 50% compression permanent set) of a non-slip material or the like in the present invention is determined by a method to be described below.

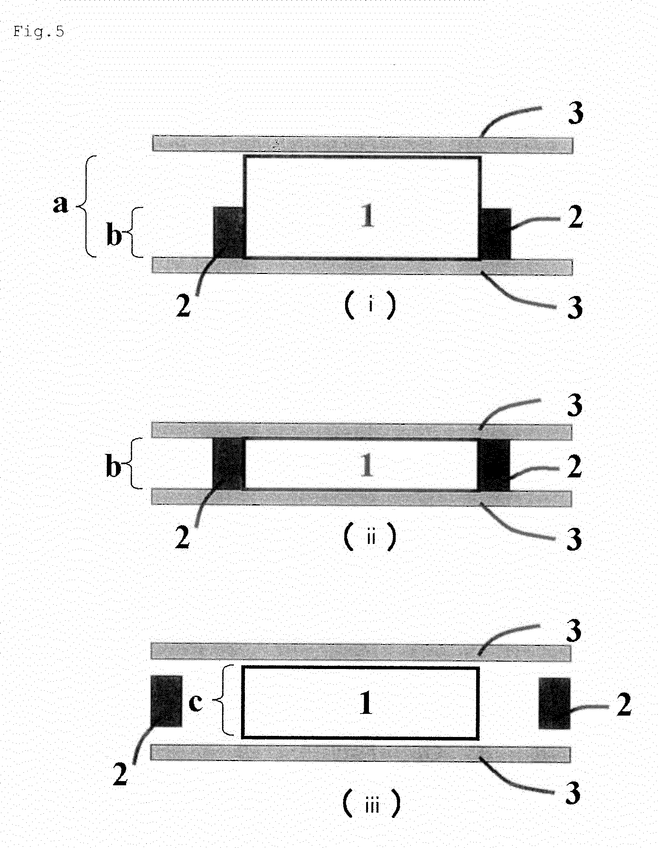

FIGS. **5** are views illustrating a method of measuring the 50% compression set recovery rate. In FIGS. **5(i), 5(ii),** and **5(iii)****,** a non-slip material or the like, spacers, and plates are represented by **1, 2,** and **3,** respectively. For the non-slip material or the like **1,** a sheet having a thickness of about 1 mm is used as a sample. A thickness **a** of the sample was exactly measured so that a thickness **b** of each of the spacers **2** was one-half the thickness **a.** As illustrated in FIG. **5(i)****,** the sample and the spacers **2** were disposed so as to be sandwiched between the two plates **3.** A pressure perpendicular to each of the plates **3** was applied to compress the sample until the thickness of the sample was equal to the thickness **b** of each of the spacers **2** as illustrated in FIG. **5** (ii) . While this compressed state was maintained, the sample was stored under an 80°C atmosphere for 22 hours. After a lapse of 22 hours, the temperature was returned to 23°C while the compressed state was maintained. After the temperature of the non-slip material **1** had been returned to 23°C, the sample was released from the compressed state and left to stand at 23°C. FIG. **5(iii)** illustrates a state after the release from the compressed state. A thickness **c** of the sample was measured 30 minutes after the release from the compressed state. A value determined by the following calculation equation (1) was defined as a 50% compression set recovery rate (80°C atmosphere, 50% compression permanent set). $Calculation equation \left(1\right) : 50 % Compression set recovery rate \left(at 80⁢°C atmosphere, 50% compression permanent set\right) ⁢ \left(%\right) = \left[\left(c-b\right)/\left(a-b\right)\right] \times 100$

### (Rate of dimensional change after storage at 125°C for 22 hours)

The resultant foam or the like was measured for its dimensional change by heating in conformity with the dimensional stability evaluation at high temperature of JIS-K-6767. That is, the resultant foam or the like was cut into a test piece having a size of 100 mm by 100 mm, stored in an oven at 125°C for 22 hours, and then determined for its rate of dimensional change before and after the heating storage treatment in conformity with the dimensional stability evaluation at high temperature of JIS-K-6767.

[Production Example 1]: Preparation of mixed syrup 1 A reactor equipped with a cooling tube, a temperature gauge, and a stirrer was fed with 173.2 parts by weight of a monomer solution formed of 2-ethylhexyl acrylate (manufactured by TOAGOSEI CO., LTD. , hereinafter abbreviated as "2EHA") as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of dibutyltin dilaurate (manufactured by KISHIDA CHEMICAL Co., Ltd., hereinafter abbreviated as "DBTL") as a urethane reaction catalyst. To the stirred mixture were added dropwise 12.4 parts by weight of hydrogenated xylylene diisocyanate (manufactured by Takeda Pharmaceutical Co., Ltd., TAKENATE 600, hereinafter abbreviated as "HXDI"), and the resultant mixture was subjected to a reaction at 65°C for 4 hours. It should be noted that the usage of a polyisocyanate component and a polyol component in terms of NCO/OH (equivalent ratio) was 1. 6. After that, 5. 6 parts by weight of 2-hydroxyethyl acrylate (manufactured by KISHIDA CHEMICAL Co., Ltd., hereinafter abbreviated as "HEA") were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer having an acryloyl group at each of both terminals/ethylenically unsaturated monomer mixed syrup were added 27.3 parts by weight of 2EHA, 51.8 parts by weight of n-butyl acrylate (manufactured by TOAGOSEI CO., LTD., hereinafter abbreviated as "BA"), 17.6 parts by weight of isobornyl acrylate (manufactured by OSAKA ORGANIC CHEMICAL INDUSTRY., hereinafter abbreviated as "IBXA"), and 10.5 parts by weight of acrylic acid (manufactured by TOAGOSEI CO., LTD., hereinafter abbreviated as "AA") as a polar monomer. Thus, a hydrophilic polyurethane-based polymer/ethylenically unsaturated monomer mixed syrup 1 was obtained.

### [Production Example 2]: Preparation of mixed syrup 2

A reactor equipped with a cooling tube, a temperature gauge, and a stirrer was fed with 173.2 parts by weight of a monomer solution formed of 2EHA as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of DBTL as a urethane reaction catalyst. To the stirred mixture were added dropwise 12.4 parts by weight of HXDI, and the resultant mixture was subjected to a reaction at 65°C for 4 hours. It should be noted that the usage of a polyisocyanate component and a polyol component in terms of NCO/OH (equivalent ratio) was 1.6. After that, 5.6 parts by weight of HEA were added dropwise, and the mixture was subj ected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer/ethylenically unsaturated monomer mixed syrup were added 95.8 parts by weight of 2EHA, 92.5 parts by weight of BA, 31.3 parts by weight of IBXA, and 18.8 parts by weight of AA as a polar monomer. Thus, a hydrophilic polyurethane-based polymer/ethylenically unsaturated monomer mixed syrup 2 was obtained.

### [Production Example 3]: Preparation of mixed syrup 3

A reactor equipped with a cooling tube, a temperature gauge, and a stirrer was fed with 173.2 parts by weight of a monomer solution formed of 2EHA as an ethylenically unsaturated monomer, 100 parts by weight of ADEKA (trademark) Pluronic L-62 (molecular weight: 2,500, manufactured by ADEKA CORPORATION, polyether polyol) as polyoxyethylene polyoxypropylene glycol, and 0.014 part by weight of DBTL as a urethane reaction catalyst. To the stirred mixture were added dropwise 12.4 parts by weight of HXDI, and the resultant mixture was subjected to a reaction at 65 °C for 4 hours. It should be noted that the usage of a polyisocyanate component and a polyol component in terms of NCO/OH (equivalent ratio) was 1. 6. After that, 5.6 parts by weight of HEA were added dropwise, and the mixture was subjected to a reaction at 65°C for 2 hours. Thus, a hydrophilic polyurethane-based polymer having an acryloyl group at each of both terminals/ethylenically unsaturated monomer mixed syrup was obtained. The resultant hydrophilic polyurethane-based polymer having an acryloyl group at each of both terminals had a weight average molecular weight of 15,000. To 100 parts by weight of the resultant hydrophilic polyurethane-based polymer/ethylenically unsaturated monomer mixed syrup were added 24.7 parts by weight of 2EHA, 41.9 parts by weight of BA, and 8.5 parts by weight of 4-hydroxybutyl acrylate (manufactured by TOAGOSEI CO., LTD., hereinafter abbreviated as "4HBA") as a polar monomer. Thus, a hydrophilic polyurethane-based polymer/ethylenically unsaturated monomer mixed syrup 3 was obtained.

### [Example 1]

100 Parts by weight of the hydrophilic polyurethane-based polymer/ethylenically unsaturated monomer mixed syrup 1 obtained in Production Example 1 were homogeneously mixed with 11.9 parts by weight of 1,6-hexanediol diacrylate (a product available under the trade name "NK Ester A-HD-N" from Shin Nakamura Chemical Co., Ltd.) (molecular weight: 226), 47.7 parts by weight of a urethane acrylate (hereinafter abbreviated as "UA") (molecular weight: 3,720) having an ethylenically unsaturated group at each of both terminals, which is obtained by treating both terminals of polyurethane synthesized from polytetramethylene glycol (hereinafter abbreviated as "PTMG") and isophorone diisocyanate (hereinafter abbreviated as "IPDI") with HEA, as a reactive oligomer, 0.48 part by weight of diphenyl(2,4,6-trimethylbenzoyl)phosphine oxide (a product available under the trade name "Lucirin TPO" from BASF) as a photoinitiator, 0.95 part by weight of a hindered phenol-based antioxidant (a product available under the trade name "IRGANOX 1010" from by Ciba Japan), and 2 parts by weight of a light stabilizer (e.g., a product available under the trade name "TINUVIN 123" from BASF). Thus, a continuous oil phase component (hereinafter referred to as "oil phase") was obtained. Meanwhile, 300 parts by weight of ion-exchanged water as an aqueous phase component (hereinafter referred to as "aqueous phase") with respect to 100 parts by weight of the oil phase were continuously supplied dropwise at normal temperature into a stirring/mixing machine as an emulsifying machine fed with the oil phase. Thus, a stable W/O emulsion was prepared. It should be noted that a weight ratio between the aqueous phase and the oil phase was 75/25.

The W/O emulsion that had been left at rest and stored under normal temperature for 30 minutes after its preparation was applied onto a release-treated polyethylene terephthalate film (hereinafter referred to as "PET film") having a thickness of 38 µm so that the thickness of a foam layer after photoirradiation became 150 µm, and the resultant was continuously formed into a sheet shape. Further, a polyester fiber laminated fabric having a thickness of 50 µm (manufactured by JX Nippon ANCI Corporation, trade name "MILIFE (trademark) TY0503FE") obtained by laminating stretched polyester continuous fibers while aligning the fibers in longitudinal and lateral directions was laminated on the sheet. Further, a product obtained by applying the W/O emulsion that had been left at rest and stored under room temperature for 30 minutes after its preparation onto a release-treated PET film having a thickness of 38 µm so that the thickness of a foam layer after photoirradiation became 150 µm was separately prepared, and the applied surface was covered with the polyester fiber laminated fabric. The sheet was irradiated with UV light having a light illuminance of 5 mW/cm² (measured with TOPCON UVR-T1 having a peak sensitivity maximum wavelength of 350 nm) by using a black light (15 W/cm) to provide a high-water content cross-linked polymer having a thickness of 310 µm. Next, the upper surface film was peeled and the high-water content cross-linked polymer was heated at 130°C over 10 minutes to provide a non-slip sheet (1) having a thickness of about 0.3 mm.

Table 1 shows the results of the respective evaluations of the resultant non-slip sheet (1).

It should be noted that no crack occurred in the non-slip sheet (1) in the 180° bending test.

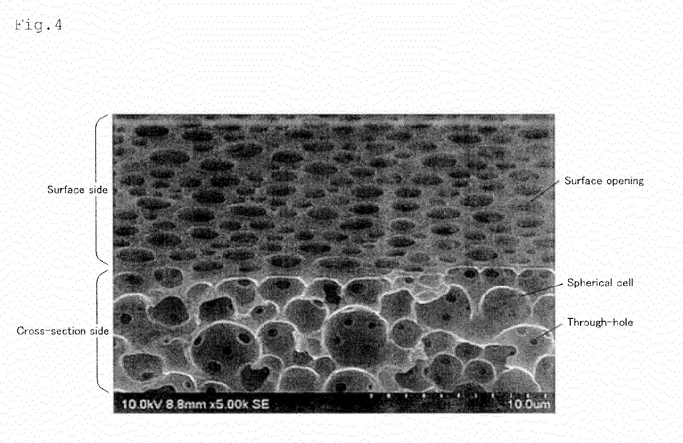

In addition, FIG. **4** shows a photographic view of a surface/cross-sectional SEM photograph obtained by photographing the produced non-slip sheet from an oblique direction.

The resultant non-slip sheet (1) was placed on a desk, and a keyboard and a mouse pad were placed on the sheet, followed by the performance of the operation of a personal computer. As a result, the sideslip of the keyboard or the mouse pad did not occur. In addition, the keyboard and the mouse pad were able to be easily lifted from the non-slip sheet (1), and the non-slip sheet (1) was able to be easily peeled from the desk. Even when the foregoing operation was repeated 20 times, none of a reduction in pressure-sensitive adhesiveness and the rupture of the sheet was observed.

In addition, when the non-slip sheet (1) was used as a temporary fixing sheet (1), a calendar was able to be temporarily fixed to a window glass. Specifically, when the four corners of an A3 size paper calendar were pressed against the window glass through the temporary fixing sheet (1) cut into dimensions measuring 3 cm by 3 cm, the calendar was able to be fixed. In addition, the calendar was able to be easily peeled from the temporary fixing sheet (1) and the temporary fixing sheet (1) was also able to be easily peeled from the window glass. Even when the foregoing operation was repeated 20 times, none of the reduction in pressure-sensitive adhesiveness and the rupture of the sheet was observed.

### [Example 2]

10.0 Parts by weight of 1,6-hexanediol diacrylate (manufactured by Shin-Nakamura Chemical Co., Ltd., trade name "NK Ester A-HD-N") (molecular weight: 226), 47.7 parts by weight of UA (molecular weight: 3,720) as a reactive oligomer, 0.49 part by weight of Lucirin TPO as a photoinitiator, 0.99 part by weight of IRGANOX 1010 as a hindered phenol-based antioxidant, and 2.05 parts by weight of TINUVIN 123 as a light stabilizer were homogeneously mixed in 100 parts by weight of the hydrophilic polyurethane-based polymer/ethylenically unsaturated monomer mixed syrup 2 obtained in Production Example 2 to provide a continuous oil phase component (hereinafter referred to as "oil phase"). Meanwhile, 186 parts by weight of ion-exchanged water as an aqueous phase component (hereinafter referred to as "aqueous phase") with respect to 100 parts by weight of the oil phase were continuously supplied dropwise under normal temperature into a stirring/mixing machine as an emulsifying machine fed with the oil phase to prepare a stable W/O emulsion. It should be noted that a weight ratio between the aqueous phase and the oil phase was 65/35.

Next, a non-slip sheet (2) having a thickness of about 0.3 mm was obtained by the same operations as those of Example 1.

Table 1 shows the results of the respective evaluations of the resultant non-slip sheet (2).

It should be noted that no crack occurred in the non-slip sheet (2) in the 180° bending test.

The non-slip sheet (2) was fixed to the surface of the sheet-feeding rubber roller of a domestic printer with a double-sided tape (manufactured by Nitto Denko Corporation, No. 5000N), and a printing test was performed on 10 sheets of A4 size plain paper. As a result, the sheets were able to be fed one by one. In addition, a failure such as peeling or rupture was not observed in a portion where the discharged plain paper and the non-slip sheet (2) were in contact with each other.

In addition, when the non-slip sheet (2) was used as a temporary fixing sheet (2), an acrylic plate was able to be temporarily fixed to a metal door. Specifically, when the four corners of the acrylic plate (ACRYLITE plate manufactured by MITSUBISHI RAYON Co. LTD.; 200 mm×300 mm×2 mm) were pressed against the metal door through the temporary fixing sheet (2) cut into dimensions measuring 1 cm by 1 cm, the acrylic plate was able to be fixed. In addition, the acrylic plate was able to be easily peeled from the temporary fixing sheet (2) and the temporary fixing sheet (2) was also able to be easily peeled from the door. Even when the foregoing operation was repeated 20 times, none of a reduction in pressure-sensitive adhesiveness and the rupture of the sheet was observed.

### [Example 3]

20 Parts by weight of 1, 6-hexanediol diacrylate (manufactured by Shin-Nakamura Chemical Co., Ltd., trade name "NK Ester A-HD-N") (molecular weight: 226), 47.7 parts by weight of UA (molecular weight: 3,720) as a reactive oligomer, 0.49 part by weight of Lucirin TPO as a photoinitiator, 0.99 part by weight of IRGANOX 1010 as a hindered phenol-based antioxidant, and 2.05 parts by weight of TINUVIN 123 as a light stabilizer were homogeneously mixed in 100 parts by weight of the hydrophilic polyurethane-based polymer/ethylenically unsaturated monomer mixed syrup 3 obtained in Production Example 3 to provide a continuous oil phase component (hereinafter referred to as "oil phase"). Meanwhile, 567 parts by weight of ion-exchanged water as an aqueous phase component (hereinafter referred to as "aqueous phase") with respect to 100 parts by weight of the oil phase were continuously supplied dropwise under normal temperature into a stirring/mixing machine as an emulsifying machine fed with the oil phase to prepare a stable W/O emulsion. It should be noted that a weight ratio between the aqueous phase and the oil phase was 85/15.

Next, a non-slip sheet (3) having a thickness of about 0.4 mm was obtained by the same operations as those of Example 1.

Table 1 shows the results of the respective evaluations of the resultant non-slip sheet (3).

It should be noted that no crack occurred in the non-slip sheet (3) in the 180° bending test.

The resultant non-slip sheet (3) was placed on the dashboard made of a resin of an automobile and a cellular phone was placed on the sheet. As a result, the cellular phone did not move even when pressed in a horizontal direction. In addition, the cellular phone was able to be easily lifted from the non-slip sheet (3) and the non-slip sheet (3) was able to be easily peeled from the dashboard of the automobile. Even when the foregoing operation was repeated 20 times, none of a reduction in pressure-sensitive adhesiveness and the rupture of the sheet was observed.

In addition, when the non-slip sheet (3) was used as a temporary fixing sheet (3), an SUS plate was able to be temporarily fixed to a resin board. Specifically, when an SUS304 plate (100 mm×49 mm×5 mm; 180 g) was pressed against a display board made of a resin through the temporary fixing sheet (3) cut into the same dimensions, the SUS plate was able to be fixed. In addition, the SUS plate was able to be easily peeled from the temporary fixing sheet (3) and the temporary fixing sheet (3) was also able to be easily peeled from the display board. Even when the foregoing operation was repeated 20 times, none of a reduction in pressure-sensitive adhesiveness and the rupture of the sheet was observed.

**[Table 1]**

| | | | | Example 1 | Example 2 | Example 3 |
|---|---|---|---|---|---|---|
| Mixed syrup No. | | | | 1 | 2 | 3 |
| Aqueous phase/oil phase weight ratio | | | | 75/25 | 65/35 | 85/15 |
| Structure of foam | Average cell diameter | Spherical cell | [µm] | 3.4 | 3.2 | 2.6 |
| | | Through-hole | [µm] | 1.2 | 1.0 | 0.9 |
| | | Opening | [µm] | 2.3 | 1.9 | 2.5 |
| | Volume density | | [g/cm³] | 0.274 | 0.349 | 0.170 |
| | Cell content | | [%] | 73 | 65 | 83 |
| Pressure-sensitive adhesive characteristic | Normal shear adhesive strength | | [N/cm²] | 52 | 31 | 48 |
| | 180° peel adhesive strength | | [N/25 mm] | 0.1 | 0.1 | 0.1 |
| | 60°C holding strength | | [mm] | 0.1 | 0.1 | 0.1 |
| Set recovery characteristic | Storage in 50% compression set×80°C×22 hours | | [%] | 93.0 | 91.0 | 86.0 |
| Heat resistance | Rate of dimensional change after storage at 125°C | | [%] | -0.4 | -0.5 | -0.3 |

### [Example 4]

The stable W/O emulsion obtained in Example 1 was applied onto a release-treated polyethylene terephthalate film (hereinafter referred to as "PET film") having a thickness of 50 µm so that the thickness of a foam layer after photoirradiation became 300 µm, and the top of the resultant was covered with a release-treated PET film having a thickness of 38 µm. The sheet was irradiated with UV light having a light illuminance of 5 mW/cm² (measured with a TOPCON UVR-T1 having a peak sensitivity maximum wavelength of 350 nm) by using a chemical lamp (15W/cm) to provide a high-water content cross-linked polymer having a thickness of 300 µm. Next, the upper surface film was peeled and the high-water content cross-linked polymer was heated at 130°C over 10 minutes to provide a foam having a thickness of about 0.3 mm. Next, a double-sided tape (manufactured by Nitto Denko Corporation, trade name "No. 5603") having a construction "pressure-sensitive adhesive layer/support (PET film)/pressure-sensitive adhesive layer" was laminated as a pressure-sensitive adhesive layer on one surface of the resultant foam to provide a non-slip (temporary fixing) sheet (4). No crack occurred in the non-slip (temporary fixing) sheet (4) in the 180° bending test.

Table 2 shows the results of the respective evaluations of the resultant non-slip (temporary fixing) sheet (4). It should be noted that a method of measuring a 90° peel test strength is as described below.

### (Measurement of 90° peel test strength)

The non-slip (temporary fixing) sheet (4) was attached and fixed onto one surface of an SUS304 plate measuring 110 mm by 80 mm by 5 mm so that its pressure-sensitive adhesive layer surface was brought into contact with the SUS304 plate. A PET film having a thickness of 50 µm (trade name "Lumirror S10#50") cut into dimensions measuring 50 mm by 150 mm was one-way crimped on the foam surface of the non-slip (temporary fixing) sheet (4) with a 2-kg roller, and the resultant was left at rest and stored under room temperature for 30 minutes. After that, the PET film was peeled with Tensilon at a tension speed of 300 mm/min in a 90° direction and a peel adhesive strength during the peeling was measured. The measurement was performed for n samples (where n represented 3) and an average value of the measured values was defined as a 90° peel test strength.

**[Table 2]**

| | | | | Example 4 |
|---|---|---|---|---|
| Mixed syrup No. | | | | 1 |
| Aqueous phase/oil phase weight ratio | | | | 75/25 |
| Structure of foam | Average cell diameter | Spherical cell | [µm] | 3.4 |
| | | Through-hole | [µm] | 1.2 |
| | | Opening | [µm] | 2.3 |
| | Volume density | | [g/cm³] | 0.273 |
| | Cell content | | [%] | 74 |
| Pressure-sensitive adhesive characteristic | Normal shear adhesive strength | | [N/cm²] | 62 |
| | 180° peel adhesive strength | | [N/25 mm] | 0.15 |
| | 60°C holding strength | | [mm] | 0.1 |
| Set recovery characteristic | Storage in 50% compression set×80°C×22 hours | | [%] | 89 |
| Heat resistance | Rate of dimensional change after storage at 125°C | | [%] | -0.6 |
| 90° peel strength of PET #50 | Initial | | [N/50 mm] | 0.7 |
| | 100-th | | [N/50 mm] | 0.8 |
| | 200-th | | [N/50 mm] | 0.7 |
| | 500-th | | [N/50 mm] | 0.8 |

### Industrial Applicability

The non-slip material of the present invention can be suitably applied to, for example: non-slip materials for furniture such as a chair, a couch, and a desk, for rugs such as a carpet, a door mat, and a luncheon mat, for interior decorations such as a vase and various ornaments, and for electronic equipment such as a telephone, an electronic calculator, and a personal computer, and their peripheral members; sheet-feeding rollers for a copying machine, a printer, a multifunction machine, and the like; non-slip materials for radio transmission equipment; non-slip mats for a stair, a slope, and the like; non-slip materials for protective sheets such as a desk mat; non-slip materials for placing small articles such as a coin, glasses, a cellular phone, and an accessory on the dashboard of an automobile; gripping materials for a racket, a bat, a club, and the like; processing/holding materials for a semiconductor material, a color filter, and the like; and carrier sheets for a circuit board, a thin-film glass module, and the like. In addition, the temporary fixing material of the present invention can be suitably applied to, for example: temporary fixing materials or temporary fixing boards for displaying or posting an advertisement, a calendar, a drawing, a memorandum, a photograph, various commercial products (e.g., portable electronic equipment such as a cellular phone and a portable game machine), and the like; temporary fixing materials for temporarily fixing a card, a coin, a touch pen, an accessory, and the like to a cellular phone and the like; temporary fixing materials or temporary fixing boards for placing small articles such as a coin, glasses, a cellular phone, and an accessory on the dashboard of an automobile; light-shielding sheets in a vehicle; temporary fixing materials for temporarily fixing objects to be charged on radio transmission charging equipment, the materials being laminated on the equipment; processing/holding materials for a semiconductor material, a color filter, and the like; carrier sheets for a circuit board, a thin-film glass module, and the like; alternative materials for a sucker, a magnet hook, and the like; wig-fixing materials; temporary fixing materials for a book stand, a book end and the like; board-shaped instructional materials or infant toys to and from which various products can be attached and peeled; pieces or boards for board games; files for re-sealing; alternative materials for MAGIC TAPE (trademark), MAGIC FASTENER (trademark), and the like; and dust-removing rollers.

### Reference Signs List

- **100**: non-slip material (temporary fixing material)
- **10**: foam
- **20**: base material
- **30**: peeling film
- **40**: pressure-sensitive adhesive layer
- **41**: support

## Claims

1. A non-slip material, comprising a foam having an open-cell structure having through-holes between adjacent spherical cells, wherein:
the spherical cells have an average pore diameter of less than 20 µm;
the through-holes have an average pore diameter of 5 µm or less;
the non-slip material has, on a surface thereof, surface openings having an average pore diameter of 20 µm or less; and
the non-slip material has a normal shear adhesive strength of 1 N/cm² or more.

2. A non-slip material according to claim 1, wherein the non-slip material has a 180° peel test strength of 1 N/25 mm or less.

3. A non-slip material according to claim 1 or 2, wherein the non-slip material has a 60°C holding strength of 0.5 mm or less.

4. A non-slip material according to any one of claims 1 to 3, wherein the non-slip material has a 50% compressive load of 150 N/cm² or less.

5. A non-slip material according to any one of claims 1 to 4, wherein the non-slip material has a rate of dimensional change when stored at 125°C for 22 hours of less than ±5%.

6. A non-slip material according to any one of claims 1 to 5, wherein when the non-slip material is stored in a 50% compressed state at 80°C for 22 hours and then cooled to 23°C, and then 30 minutes lapse after release of the compressed state, the non-slip material has a 50% compression set recovery rate of 70% or more.

7. A non-slip material according to any one of claims 1 to 6, wherein the foam has a density of from 0.15 g/cm³ to 0.6 g/cm³.

8. A non-slip material according to any one of claims 1 to 7, wherein the foam has a cell content of 30% or more.

9. A non-slip material according to any one of claims 1 to 8, wherein the non-slip material comprises a temporary fixing material.
